# EUROPEAN PATENT APPLICATION

(11) **EP 4 819 316 A1**
(43) Date of publication of application: **07.10.2026**
(21) Application number: 25891154.4
(22) Date of filing: 04.11.2025
(51) Int. Cl.: H01M 50/15, H01M 50/531, H01M 50/536

(54) **SECONDARY BATTERY AND BATTERY PACK**

(30) Priority: 13.11.2024 CN 202422772051 U
(71) Applicant: Sunwoda Mobility Energy Technology Co., Ltd., Shenzhen, Guangdong 518107 (CN)
(72) Inventor: HU, Chunbo, Shenzhen, Guangdong 518107 (CN); YANG, Wei, Shenzhen, Guangdong 518107 (CN); XU, Zhongling, Shenzhen, Guangdong 518107 (CN)
(74) Representative: Patentwerk B.V.
(86) International application number: PCT/CN2025/132288
(87) International publication number: WO 2026/103565

(57) **Abstract**

A secondary battery and a battery pack are provided. The secondary battery includes a housing, an electrode assembly, and a cover plate assembly. The housing is provided with an accommodating cavity. The electrode assembly includes a main body and a tab. The cover plate assembly includes a cover plate, a blocking member, a first insulating member, a terminal, and a connection piece. The cover plate is connected to the housing. The first insulating member is connected to the cover plate. The terminal extends through the cover plate and the first insulating member. A side of the connection piece facing away from the electrode assembly is connected to the terminal. The tab is electrically connected to the connection piece.

## Description

### CROSS-REFERENCE TO RELATED APPLICATION

This application claims priority to Chinese Utility Model No. 202422772051.8, filed November 13, 2024, entitled "SECONDARY BATTERY AND BATTERY PACK", the contents of which are incorporated herein by reference in their entirety.

### TECHNICAL FIELD

The present disclosure relates to the field of battery technologies, and particularly to a secondary battery and a battery pack.

### BACKGROUND

In the field of power batteries, to connect a plurality of electrode assemblies and a cover plate assembly, it is necessary to place the plurality of electrode assemblies on two sides of the cover plate assembly, connect the cover plate assembly and tabs of the electrode assemblies, and then flip and group the plurality of electrode assemblies and place them into a housing.

However, connecting the plurality of electrode assemblies and the cover plate assembly requires a large operating space to dispose the plurality of electrode assemblies on two sides of the cover plate assembly. Moreover, it is difficult to flip and group the electrode assemblies, which leads to high manufacturing difficulty and low manufacturing efficiency of secondary batteries.

### SUMMARY

The present disclosure provides a secondary battery, in view of technical concerns involving high manufacturing difficulty and low manufacturing efficiency of secondary batteries. The present disclosure also provides a battery pack.

In a technical scheme, the present disclosure provides a secondary battery, having a thickness direction and a length direction intersecting the thickness direction. The secondary battery includes: a housing, provided with an accommodating cavity; an electrode assembly, arranged in the accommodating cavity, where the electrode assembly includes a main body and a tab connected to the main body; a cover plate assembly, including a cover plate, a blocking member, a first insulating member, a terminal, and a connection piece. The cover plate is connected to the housing . The cover plate covers and seals the accommodating cavity. The cover plate is provided with an operation opening. The operation opening extends through the cover plate in the thickness direction. The operation opening is in communication with the accommodating cavity. The blocking member is connected to the cover plate. The blocking member covers and seals the operation opening. The first insulating member is arranged in the accommodating cavity. In the thickness direction, the first insulating member is connected to a side of the cover plate facing the electrode assembly. The terminal extends through the cover plate and the first insulating member. The terminal is arranged spaced apart from the blocking member in the length direction. The connection piece is arranged in the accommodating cavity. A side of the connection piece facing away from the electrode assembly is connected to the terminal. The tab is electrically connected to the connection piece. In the thickness direction, at least a part of the tab and at least a part of the connection piece are visible and accessible through the operation opening on the cover plate. The secondary battery further includes a second insulating member arranged in the accommodating cavity and connected to the first insulating member. In the thickness direction, the second insulating member is connected to a side of the main body facing the cover plate. A side of the connection piece away from the cover plate is connected to the second insulating member.

In some embodiments, the second insulating member includes a base portion and a supporting portion. In the thickness direction, the base portion is connected to a side of the connection piece facing the main body. The supporting portion is connected, in the thickness direction, between the base portion and the main body, and is connected to the base portion and the main body respectively. The tab is arranged spaced apart from the supporting portion in the length direction.

In some embodiments, the terminal extends through the first insulating member. The first insulating member is provided with a second mounting hole. The second mounting hole is in communication with the operation opening and the accommodating cavity. The second insulating member further includes a connection portion. The connection portion is connected to the first insulating member. A part of the connection portion is connected to the base portion in the thickness direction.

In some embodiments, the base portion is provided with a first connection hole extending through the base portion in the thickness direction. A part of the tab extends through the first connection hole. The tab is connected to the side of the connection piece facing away from the electrode assembly.

In some embodiments, the connection piece is provided with a second connection hole. The second connection hole extends through the connection piece in the thickness direction. The second connection hole is in communication with the first connection hole. The part of the tab extending through the first connection hole extends through the second connection hole.

In some embodiments, the blocking member has a first surface facing the accommodating cavity. An orthographic projection of the connection piece in the thickness direction onto a plane in which the first surface is located, is within an orthographic projection of the base portion onto the plane in which the first surface is located.

In some embodiments, the blocking member is further provided with a liquid injection hole. The liquid injection hole extends through the blocking member in the thickness direction. The base portion includes a diversion region. The diversion region is provided with a diversion cavity having an opening facing the liquid injection hole. The diversion cavity is in communication with the liquid injection hole. The diversion region is provided with a first diversion hole extending therethrough in the thickness direction. The first diversion hole is in communication with the diversion cavity and the accommodating cavity. The first diversion hole has a first hole wall. An orthographic projection of the first hole wall in the thickness direction onto the blocking member is located on a peripheral side of the liquid injection hole.

In some embodiments, the second insulating member is further provided with a diversion groove. The diversion groove extends through the base portion and a surface of the supporting portion facing the base portion in the thickness direction. The supporting portion is provided with a second diversion hole extending therethrough in the thickness direction. The second diversion hole is in communication with the diversion groove.

In some embodiments, the cover plate assembly includes a plurality of connection pieces. The second insulating member further includes a protruding portion. The protruding portion is connected to a side of the base portion close to the connection pieces in the thickness direction. At least one of the connection pieces is connected to a side of the protruding portion away from the base portion in the thickness direction.

The present disclosure further provides a battery pack including the secondary battery of any one of the above embodiments.

Beneficial effects: The secondary battery provided by the embodiments of the present disclosure includes a housing, an electrode assembly, a cover plate assembly, and a second insulating member. The housing is provided with an accommodating cavity. The electrode assembly is arranged in the accommodating cavity. The electrode assembly includes a main body and a tab connected to the main body. The cover plate assembly includes a cover plate, a blocking member, a first insulating member, a terminal, and a connection piece. The cover plate is connected to the housing. The cover plate covers and seals the accommodating cavity. The cover plate is provided with an operation opening extending through the cover plate in the thickness direction. The operation opening is in communication with the accommodating cavity. The blocking member is connected to the cover plate. The blocking member covers and seals the operation opening. The first insulating member is arranged in the accommodating cavity, and is connected to a side of the cover plate facing the electrode assembly in the thickness direction. The terminal extends through the cover plate and the first insulating member. The terminal is arranged spaced apart from the blocking member in the length direction. The connection piece is arranged in the accommodating cavity. A side of the connection piece facing away from the electrode assembly is connected to the terminal. The tab is electrically connected to the connection piece. In the thickness direction, at least a part of the tab and at least a part of the connection piece are visible and accessible through the operation opening on the cover plate. The second insulating member is arranged in the accommodating cavity and is connected to the first insulating member. The second insulating member is connected to a side of the main body facing the cover plate in the thickness direction. A side of the connection piece away from the cover plate is connected to the second insulating member. In the present disclosure, the cover plate is provided with the operation opening, so that after the electrode assembly is placed in the housing, an operation of welding the tab and the connection piece can be performed through the operation opening. As such, the difficulty of welding the tab and the connection piece can be reduced, and the manufacturing efficiency of the secondary battery can be improved.

In addition, the arrangement of the second insulating member to insulate the main body and the connection piece in the present disclosure prevents the connection piece from being inserted into the main body to cause a short circuit, thereby improving the use reliability of the secondary battery.

### BRIEF DESCRIPTION OF DRAWINGS

The technical schemes and other beneficial effects of the present disclosure will become apparent from the detailed description of the present disclosure provided below in conjunction with the accompanying drawings.
FIG. 1 is a schematic structural diagram of a secondary battery according to an embodiment of the present disclosure;
FIG. 2 is a sectional view of a secondary battery according to an embodiment of the present disclosure;
FIG. 3 is a detailed view of part C in FIG. 2;
FIG. 4 is a sectional view of a secondary battery according to an embodiment of the present disclosure when viewed from another angle;
FIG. 5 is a detailed view of part A in FIG. 4;
FIG. 6 is a detailed view of part B in FIG. 4;
FIG. 7 is a schematic structural diagram of a cover plate assembly in a secondary battery according to an embodiment of the present disclosure;
FIG. 8 is a schematic exploded view of a cover plate assembly in a secondary battery according to an embodiment of the present disclosure;
FIG. 9 is a bottom view of a cover plate assembly in a secondary battery according to an embodiment of the present disclosure;
FIG. 10 is a schematic structural diagram of a first insulating member in a secondary battery according to an embodiment of the present disclosure;
FIG. 11 is a schematic structural diagram of a second insulating member in a secondary battery according to an embodiment of the present disclosure;
FIG. 12 is a front view of a second insulating member in a secondary battery according to an embodiment of the present disclosure; and
FIG. 13 a top view of a second insulating member in a secondary battery according to an embodiment of the present disclosure.

List of reference numerals: 100, housing; 110, accommodating cavity; 200, cover plate assembly; 210, cover plate; 211, operation opening; 212, second hole wall; 213, third hole wall; 214, third surface; 215, fourth surface; 220, blocking member; 221, first surface; 222, liquid injection hole; 230, terminal; 240, connection piece; 241, second connection hole; 250, first insulating member; 251, second mounting hole; 300, electrode assembly; 310, main body; 320, tab; 400, second insulating member; 410, base portion; 411, first connection hole; 420, supporting portion; 421, second diversion hole; 430, connection portion; 440, diversion region; 441, diversion cavity; 442, first diversion hole; 443, first hole wall; 444, second surface; 445, through slot; 450, diversion groove; 460, protruding portion.

### DETAILED DESCRIPTION

The technical scheme of the embodiments of the present disclosure will be clearly and completely described below in conjunction with the accompanying drawings of the embodiments. Apparently, the described embodiments are merely part of the embodiments of the present disclosure, rather than all embodiments. All other embodiments obtained by those having ordinary skills in the art based on the embodiments of the present disclosure without any creative work shall fall within the protection scope of the present disclosure.

In the description of the present disclosure, it is to be noted that unless specified or limited otherwise, the terms "connected," "coupled," and the like are used broadly, and may be, for example, fixed connections, detachable connections, or integral connections; may also be mechanical connections, or electric connections or mutual communication; may also be direct connections, or indirect connections via intervening structures; may also be inner communications or interaction of two elements. The specific meaning of the above terms within the present disclosure may be understood by those having ordinary skills in the art according to particular circumstances. In the description of the present disclosure, "a plurality of/multiple" means two or more than two, unless specified otherwise. In addition, terms such as "first" and "second" are used herein for purposes of description and are not intended to indicate or imply relative importance or significance or to imply the number of indicated technical features. Thus, the feature defined with "first" and "second" may explicitly or implicitly includes one or more of the features.

It should be further noted that in the accompanying drawings of the embodiments of the present disclosure, arrows labeled X, Y and Z respectively indicate a length direction X, a width direction Y and a thickness direction Z. The introduction of the length direction X, the width direction Y and the thickness direction Z in the description of the present disclosure is to more clearly illustrate the relative positional relationships therein. The length direction X, the width direction Y and the thickness direction Z are three mutually intersecting relative directions, rather than absolute orientations. In practical application, the length direction X, the width direction Y and the thickness direction Z may point to any orientation in space, so long as their intersecting relationship is maintained.

The following description provides several different embodiments or examples for implementing different structures of the present disclosure. To simplify the description of the present disclosure, components and arrangements of specific examples are described below. Obviously, these are merely exemplary and are not intended to limit the present disclosure.

In the field of power batteries, to connect a plurality of electrode assemblies 300 and a cover plate assembly 200, it is necessary to place the plurality of electrode assemblies 300 on two sides of the cover plate assembly 200, connect the cover plate assembly 200 and tabs of the electrode assemblies 300, and then flip and group the plurality of electrode assemblies 300 and place them into a housing 100.

However, connecting the plurality of electrode assemblies 300 and the cover plate assembly 200 requires a large operating space to dispose the plurality of electrode assemblies 300 on two sides of the cover plate assembly 200. Moreover, it is difficult to flip and group the electrode assemblies 300, which leads to high manufacturing difficulty and low manufacturing efficiency of secondary batteries.

In view of technical concerns in flipping and grouping the electrode assembly 300, which lead to high manufacturing difficulty and low manufacturing efficiency of secondary batteries, an embodiment of the present disclosure provides a secondary battery. Referring to FIG. 1, the secondary battery includes a housing 100, an electrode assembly 300, a cover plate assembly 200, and a second insulating member 400. The housing 100 is provided with an accommodating cavity 110. The electrode assembly 300 is arranged in the accommodating cavity 110. The electrode assembly 300 includes a main body 310 and a tab 320 connected to the main body 310. The cover plate assembly 200 includes a cover plate 210, a blocking member 220, a first insulating member 250, a terminal 230, and a connection piece 240. The cover plate 210 is connected to the housing 100. The cover plate 210 covers and seals the accommodating cavity 110. The cover plate 210 is provided with an operation opening 211 extending through the cover plate 210 in the thickness direction Z. The operation opening 211 is in communication with the accommodating cavity 110. The blocking member 220 is connected to the cover plate 210. The blocking member 220 covers and seals the operation opening 211. The first insulating member 250 is arranged in the accommodating cavity 110, and is connected to a side of the cover plate 210 facing the electrode assembly 300 in the thickness direction Z. The terminal 230 extends through the cover plate 210 and the first insulating member 250. The terminal 230 is arranged spaced apart from the blocking member 220 in the length direction X. The connection piece 240 is arranged in the accommodating cavity 110. A side of the connection piece 240 facing away from the electrode assembly 300 is connected to the terminal 230. The tab 320 is electrically connected to the connection piece 240. In the thickness direction Z, at least a part of the tab 320 and at least a part of the connection piece 240 are visible and accessible through the operation opening 211 on the cover plate 210. The second insulating member 400 is arranged in the accommodating cavity 110 and is connected to the first insulating member 250. In the thickness direction Z, the second insulating member 400 is connected to a side of the main body 310 facing the cover plate 210. A side of the connection piece 240 away from the cover plate 210 is connected to the second insulating member 400. A detailed description is given below.

In some embodiments, a battery pack includes a casing and a plurality of secondary batteries arranged in the casing. The secondary batteries include, but are not limited to, lithium-ion secondary batteries, lithium-ion primary batteries, lithium-sulfur batteries, sodium-lithium-ion batteries, sodium-ion batteries, magnesium-ion batteries, and the like, and the embodiments of the present disclosure are not limited thereto. The battery pack is a power supply of an electrical device. The electrical device may be a mobile phone, a portable device, a notebook computer, an electric bicycle, an electric automobile, a ship, a space vehicle, an electric toy, an electric tool, and the like. For example, the space vehicle includes an airplane, a rocket, a space shuttle, a spacecraft, and the like. The electric toy includes a fixed or mobile electric toy, e.g., a game console, an electric vehicle toy, an electric ship toy, an electric airplane toy, etc. The electric tool includes an electric metal-cutting tool, an electric grinding tool, an electric assembly tool, and an electric railway tool, e.g., an electric drill, an electric grinder, an electric wrench, an electric screwdriver, an electric hammer, an electric impact drill, a concrete vibrator, an electric planer, etc.

The secondary battery provided in the embodiments of the present disclosure will be described below.

Referring to FIG. 1 and FIG. 2, in some embodiments, the secondary battery has a thickness direction Z and a length direction X intersecting the thickness direction Z, and includes a housing 100. The housing 100 is provided with an accommodating cavity 110.

The secondary battery further includes an electrode assembly 300 arranged in the accommodating cavity 110. The electrode assembly 300 includes a main body 310 and a tab 320 connected to the main body 310.

The secondary battery further includes a cover plate assembly 200. The cover plate assembly 200 includes a cover plate 210, a blocking member 220, a first insulating member 250, a terminal 230, and a connection piece 240. The cover plate 210 is connected to the housing 100. The cover plate 210 covers and seals the accommodating cavity 110. The cover plate 210 is provided with an operation opening 211 extending through the cover plate 210 in the thickness direction Z. The operation opening 211 is in communication with the accommodating cavity 110. The blocking member 220 is connected to the cover plate 210. The blocking member 220 covers and seals the operation opening 211. The first insulating member 250 is arranged in the accommodating cavity 110, and is connected to a side of the cover plate 210 facing the electrode assembly 300 in the thickness direction Z. The terminal 230 extends through the cover plate 210 and the first insulating member 250. The terminal 230 is arranged spaced apart from the blocking member 220 in the length direction X. The connection piece 240 is arranged in the accommodating cavity 110. A side of the connection piece 240 facing away from the electrode assembly 300 is connected to the terminal 230. The tab 320 is electrically connected to the connection piece 240. In the thickness direction Z, at least a part of the tab 320 and at least a part of the connection piece 240 are visible and accessible through the operation opening 211 on the cover plate 210.

The secondary battery further includes a second insulating member 400 arranged in the accommodating cavity 110 and connected to the first insulating member 250. The second insulating member 400 is connected to a side of the main body 310 facing the cover plate 210 in the thickness direction Z. A side of the connection piece 240 away from the cover plate 210 is connected to the second insulating member 400.

In the above embodiments, the cover plate 210 of the secondary battery is provided with the operation opening 211. In the thickness direction Z, at least a part of the connection piece 240 and at least a part of the tab 320 are visible and accessible through the operation opening 211 on the cover plate 210. In other words, in the thickness direction Z, an orthographic projection of at least a part of the connection piece 240 and at least a part of the tab 320 onto a plane in which a surface of the cover plate 210 facing the accommodating cavity 110 is located, is within the operation opening 211. The tab 320 and the connection piece 240 in the accommodating cavity 110 can be welded through the operation opening 211, so that the manufacturing difficulty of the secondary battery can be reduced, and the manufacturing efficiency of the secondary battery can be improved. Especially in the manufacture of a secondary battery having a plurality of electrode assemblies 300, this can simplify the grouping operation after the electrode assemblies 300 and the cover plate assembly 200 are connected, and reduce the operation difficulty in the grouping process, thereby reducing the manufacturing difficulty of the secondary battery and improving the manufacturing efficiency.

In this embodiment, the plurality of electrode assemblies 300 are grouped first, and then the tabs 320 and the connection pieces 240 are welded, which can simplify the grouping operation and reduce the manufacturing difficulty of the secondary battery.

It can be understood that when the tab 320 and the connection piece 240 are welded through the operation opening 211, the connection piece 240 may be subjected to a force applied by the tab 320 toward the main body 310 in the thickness direction Z because the tab 320 is located on a side of the connection piece 240 away from the main body 310. In addition, because only one end of the tab 320 is connected to the terminal 230 and the other end of the tab 320 is suspended, the connection piece 240 may be deformed toward the main body 310 by the force applied by the tab 320 toward the main body 310, and may come into contact with the main body 310 to cause a short circuit.

In the above embodiments, referring to FIG. 2 and FIG. 3, the secondary battery further includes a second insulating member 400. The second insulating member 400 is arranged between the connection piece 240 and the main body 310, and is respectively connected to the connection piece 240 and the main body 310, so that the main body 310 can support the connection piece 240 through the second insulating member 400, to prevent the connection piece 240 from being deformed toward the main body 310 by the force, thereby preventing the connection piece 240 from coming into contact with the main body 310 to cause a short circuit. In addition, the second insulating member 400 can also connect the connection piece 240 and the main body 310 in an insulating manner, to prevent the connection piece 240 and the main body 310 from being indirectly electrically connected by the second insulating member 400.

During welding of the tab 320, a pressure is applied to the connection piece 240 in a direction from the cover plate 210 toward the electrode assembly 300, and the second insulating member 400 connected between the main body 310 and the connection piece 240 can provide a supporting force for the connection piece 240, to prevent the connection piece 240 from being deformed toward the main body 310.

In some embodiments, referring to FIG. 4, FIG. 5, FIG. 11, and FIG. 12, the second insulating member 400 includes a base portion 410 and a supporting portion 420. The base portion 410 is connected to a side of the connection piece 240 facing the main body 310 in the thickness direction Z. The supporting portion 420 is connected between the base portion 410 and the main body 310 in the thickness direction Z and is respectively connected to the base portion 410 and the main body 310. The tab 320 is arranged spaced apart from the supporting portion 420 in the length direction X.

It can be understood that referring to FIG. 2, a part of the tab 320 is disposed on a side of the main body 310 close to the cover plate 210, and the supporting portion 420 is used for separating the base portion 410 from the main body 310, so that a clearance is formed between the base portion 410 and the main body 310. In addition, the supporting portion 420 is arranged spaced apart from the tab 320. In the above embodiments, the arrangement of the supporting portion 420 prevents the base portion 410 from pressing against the tab 320 when connected to the main body 310 and supporting the connection piece 240, so as to avoid damage to the tab 320, thereby improving the reliability of use of the secondary battery.

In some embodiments, referring to FIG. 4 and FIG. 5, the first insulating member 250 is arranged in the accommodating cavity 110 and is connected to the cover plate 210, the terminal 230 extends through the first insulating member 250, the first insulating member 250 is provided with a second mounting hole 251, and the second mounting hole 251 is in communication with the operation opening 211 and the accommodating cavity 110. The first insulating member 250 is spaced apart from the housing 100 in a direction perpendicular to the thickness direction Z to form a clearance. The second insulating member 400 further includes a connection portion 430. A part of the connection portion 430 is arranged in the clearance and is connected to the first insulating member 250. A part of the connection portion 430 is connected to the base portion 410 in the thickness direction Z.

In some embodiments, a snap-fit tab is arranged on a peripheral side of the first insulating member 250, an engagement hole is formed through the connection portion 430 in a direction perpendicular to the thickness direction Z, and the snap-fit tab is configured to be engaged in the engagement hole, so that the connection portion 430 can be snap-fitted to the first insulating member 250. Compared with hot-melt connection, the use of the snap-fit tab and the engagement hole offers the advantages of easier processing and lower cost.

In the above embodiments, the second insulating member 400 can be fixed to the first insulating member 250 to facilitate the mounting of the cover plate assembly 200 to the housing 100, and the first insulating member 250 can also position the second insulating member 400 in the thickness direction Z and in a direction perpendicular to the thickness direction Z. The second insulating member 400 is first connected to the first insulating member 250, and then the cover plate assembly 200 is connected to the housing 100 to cover and seal the accommodating cavity 110.

In addition, the snap-fit connection between the first insulating member 250 and the second insulating member 400 facilitates the mounting process and can reduce the number of hot work operations in the assembly process of the cover plate assembly 200, thereby reducing the manufacturing difficulty of the secondary battery and improving the manufacturing efficiency of the secondary battery.

In some embodiments, referring to FIG. 5, FIG. 6, and FIG. 11, the base portion 410 is provided with a first connection hole 411 extending through the base portion 410 in the thickness direction Z, a part of the tab 320 extends through the first connection hole 411, and the tab 320 is connected to the side of the connection piece 240 facing away from the electrode assembly 300. In other words, a part of the tab 320 extends through the first connection hole 411, and a part of the tab 320 is fixedly connected to the side of the connection piece 240 facing away from the electrode assembly 300.

To connect the cover plate assembly 200 and the electrode assembly 300, the tab 320 is first passed through the first connection hole 411, then the tab 320 is folded so that a part of the tab 320 is located on the side of the connection piece 240 facing away from the electrode assembly 300, and then the connection piece 240 is welded to the tab 320.

In the above embodiments, the arrangement of the first connection hole 411 obviates the need to bypass the base portion 410 along the width direction Y for connection between the tab 320 and the connection piece 240, and keeps the tab 320 away from the housing 100 to prevent the tab 320 from coming into contact with the housing 100, thereby further reducing the possibility of short circuit of the secondary battery. In addition, folding a part of the tab 320 onto the side of the connection piece 240 away from the electrode assembly 300 can also facilitate the positioning of the tab 320 during welding, thereby reducing the difficulty of connecting the tab 320 and the connection piece 240. Moreover, folding a part of the tab 320 onto the side of the connection piece 240 away from the electrode assembly 300 can also reduce the space occupied by the tab 320 in the accommodating cavity 110 in the thickness direction Z, thereby improving the utilization of space in the secondary battery, making the structure of the secondary battery more compact, and achieving a higher volumetric energy density of the secondary battery.

In some embodiments, referring to FIG. 5 and FIG. 6, the connection piece 240 is provided with a second connection hole 241 extending through the connection piece 240 in the thickness direction Z, the second connection hole 241 is in communication with the first connection hole 411, and the part of the tab 320 extending through the first connection hole 411 extends through the second connection hole 241.

In the above embodiments, the arrangement of the second connection hole 241 obviates the need for the tab 320 to bypass the side of the connection piece 240 in the width direction Y in order to be connected to the side of the connection piece 240 away from the electrode assembly 300, thereby reducing the length of the tab 320 and reducing the difficulty of connecting the tab 320 to the connection piece 240.

In addition, it can be understood that a part of the tab 320 may be connected to one side of the second connection hole 241 in the width direction Y, and a part of the tab 320 may be connected to the other side of the second connection hole 241 in the width direction Y, i.e., the connection piece 240 is subjected to a force in the thickness direction Z during the welding process on the two sides of the second connection hole 241 in the width direction Y. An elastic portion is arranged on each of the two sides of the first connection hole 411 in the width direction Y to support the part of the connection piece 240 to be welded to the tab 320, thereby further improving the support effect of the supporting member on the connection piece 240.

In some embodiments, referring to FIG. 9, the blocking member 220 has a first surface 221 facing the accommodating cavity 110, and an orthographic projection of the connection piece 240 in the thickness direction Z onto a plane in which the first surface 221 is located is within an orthographic projection of the base portion 410 onto the plane in which the first surface 221 is located.

In other words, the base portion 410 can completely cover the connection piece 240 in the thickness direction Z. Referring to FIG. 9 which is a bottom view of the cover plate assembly 200, because the base portion 410 can completely cover the connection piece 240 in the thickness direction Z, the connection piece 240 is not visible in FIG. 9.

In the above embodiments, because the base portion 410 completely covers the connection piece 240 in the thickness direction Z, the probability of the connection piece 240 coming into contact with the main body 310 is further reduced, and the reliability of use of the secondary battery is further improved.

In some embodiments, the blocking member 220 is further provided with a liquid injection hole 222 extending through the blocking member 220 in the thickness direction Z. The base portion 410 includes a diversion region 440. The diversion region 440 is provided with a diversion cavity 441 having an opening facing the liquid injection hole 222. The diversion cavity 441 is in communication with the liquid injection hole 222. The diversion region 440 is provided with a first diversion hole 442 extending therethrough in the thickness direction Z. The first diversion hole 442 is in communication with the diversion cavity 441 and the accommodating cavity 110. The first diversion hole 442 has a first hole wall 443. An orthographic projection of the first hole wall 443 in the thickness direction Z onto the blocking member 220 is located on a peripheral side of the liquid injection hole 222.

Referring to FIG. 11, FIG. 12, and FIG. 13, the blocking member 220 has a first surface 221 facing the accommodating cavity 110, the blocking member 220 is further provided with a liquid injection hole 222 extending through the blocking member 220 in the thickness direction Z, the liquid injection hole 222 extends through the first surface 221, and the liquid injection hole 222 is in communication with the accommodating cavity 110.

The second insulating member 400 further includes a diversion region 440 extending through the base portion 410 in the thickness direction Z. The diversion region 440 is provided with a diversion cavity 441 having an opening facing the liquid injection hole 222. The diversion region 440 is provided with a first diversion hole 442 extending through the diversion region 440 in the thickness direction Z. The first diversion hole 442 has a first hole wall 443. An orthographic projection of the first hole wall 443 in the thickness direction Z onto the plane in which the first surface 221 is located, is located on a peripheral side of the liquid injection hole 222. The diversion region 440 has a second surface 444 facing the blocking member 220. The opening of the diversion cavity 441 is located on the second surface 444.

In some embodiments, the second insulating member 400 is further provided with a diversion groove 450, the diversion groove 450 extends through the base portion 410 and a surface of the supporting portion 420 facing the base portion 410 in the thickness direction Z, the supporting portion 420 is provided with a second diversion hole 421 extending therethrough in the thickness direction Z, and the second diversion hole 421 is in communication with the diversion groove 450.

The diversion region 440 is provided with a through slot 445 extending through the diversion region 440 in the length direction X. The through slot 445 is in communication with the diversion cavity 441, and the through slot 445 extends through the second surface 444. The second insulating member 400 is further provided with a diversion groove 450. The diversion groove 450 extends through the base portion 410 and a surface of the supporting portion 420 facing the base portion 410 in the thickness direction Z. The supporting portion 420 is provided with a second diversion hole 421 extending therethrough in the thickness direction Z. The second diversion hole 421 is in communication with the diversion groove 450.

In the above embodiments, the orthographic projection of the first hole wall 443 in the thickness direction Z onto the plane in which the first surface 221 is located, is located on the peripheral side of the liquid injection hole 222. In other words, the liquid injection hole 222 is staggered from the first diversion hole 442 in the thickness direction Z, and an electrolyte solution entering the accommodating cavity 110 through the liquid injection hole 222 is blocked by the diversion region 440, and then flows to the electrode assembly 300 through the first diversion hole 442. Such a configuration prevents the electrolyte solution from directly rushing to the electrode assembly 300 to damage the main body 310 of the electrode assembly 300, thereby reducing the manufacturing difficulty of the secondary battery.

In addition, when a flow rate at the liquid injection hole 222 is higher than a flow rate at the first diversion hole 442, the liquid level of the electrolyte solution in the diversion cavity 441 rises. When the liquid level rises to the through slot 445, the electrolyte solution flows to two sides of the diversion region 440 through the through slot 445, and a part of the electrolyte solution flows to the electrode assembly 300 through the first connection holes 411. As such, the electrolyte solution can flow in the length direction X, thereby achieving a more uniform distribution of the electrolyte solution in the length direction X.

Moreover, the diversion groove 450 provided in the supporting portion 420 can receive the other part of the electrolyte solution flowing out through the through slot 445, and allows the electrolyte solution to flow from the second diversion hole 421 to the electrode assembly 300, further allowing the electrolyte solution to flow in the length direction X, thereby making the distribution of the electrolyte solution in the length direction X more uniform. Such a configuration prevents the electrolyte solution flowing at a high rate from damaging the electrode assembly 300 while ensuring the electrolyte solution filling efficiency.

In some embodiments, referring to FIG. 6 and FIG. 11, the cover plate assembly 200 includes a plurality of connection pieces 240. The second insulating member 400 further includes a protruding portion 460. The protruding portion 460 is connected to a side of the base portion 410 close to the connection pieces 240 in the thickness direction Z. At least one of the connection pieces 240 is connected to a side of the protruding portion 460 away from the base portion 410 in the thickness direction Z.

It can be understood that in some embodiments, dimensions of some terminals 230 in the thickness direction Z are smaller than dimensions of some other terminals 230 in the thickness direction Z, which in turn results in different spacings in the thickness direction Z between the connection pieces 240 and the base portions 410 connected to different terminals 230.

In some embodiments, a dimension of a negative terminal 230 in the thickness direction Z is smaller than a dimension of a positive terminal 230 in the thickness direction Z.

In the above embodiments, the arrangement of the protruding portion 460 enables the connection pieces 240 connected to different terminals 230 to be supported by the supporting member, to further reduce the difficulty of welding the connection piece 240 and the tab 320, thereby reducing the manufacturing difficulty of the secondary battery and improving the manufacturing efficiency of the secondary battery.

In some embodiments, referring to FIG. 13, the cover plate 210 further has a width direction Y. The thickness direction Z, the length direction X, and the width direction Y intersect each other. The second insulating member 400 includes a plurality of protruding portions 460. At least a subset of the plurality of protruding portions 460 are spaced apart from each other in the width direction Y. At least one connection piece 240 is connected to at least two protruding portions 460.

In some embodiments, the plurality of protruding portions 460 are further arranged spaced part from each other in the length direction X.

In some embodiments, the plurality of protruding portions 460 are arranged in an array in the length direction X and the width direction Y.

In the above embodiments, through the arrangement of the plurality of protruding portions 460 spaced apart from each other in the width direction Y to enable the supporting member to apply a uniform supporting force to the connection pieces 240 in the width direction Y, the supporting member can better support the connection pieces 240 to prevent the connection pieces 240 from being deformed after being stressed, thereby further reducing the difficulty of welding the connection pieces 240 and the tabs 320.

In some embodiments, referring to FIG. 3, the cover plate 210 has a third surface 214 and a fourth surface 215 facing away from the third surface 214 in the thickness direction Z. The fourth surface 215 faces the accommodating cavity 110. The operation opening 211 extends through the third surface 214 and the fourth surface 215. The operation opening 211 has a second hole wall 212 and a third hole wall 213 connected to the second hole wall 212 in the thickness direction Z. The second hole wall 212 is connected to the third surface 214. The third hole wall 213 is connected to the fourth surface 215. In the thickness direction Z, an orthographic projection of the third hole wall 213 onto the fourth surface 215 is located on an inner side of an orthographic projection of the second hole wall 212 onto the fourth surface 215. The blocking member 220 is connected to the second hole wall 212.

In the above embodiments, the second hole wall 212 connected to the blocking member 220 is configured to position the blocking member 220 in the length direction X and the width direction Y. Upon coming into contact with the second hole wall 212, the blocking member 220 can be automatically aligned with the second hole wall 212, to facilitate the welding of the blocking member 220 to the cover plate 210. The third hole wall 213 is configured to stop the blocking member 220 from moving toward the accommodating cavity 110, i.e., the third hole wall 213 can limit the blocking member 220 in the thickness direction Z.

In addition, when the blocking member 220 and the cover plate 210 are laser-welded, the third hole wall 213 can block the laser from entering the accommodating cavity 110 to damage components in the accommodating cavity 110, to reduce the difficulty of welding the blocking member 220 to the cover plate 210, thereby reducing the manufacturing difficulty of the secondary battery and improving the manufacturing efficiency of the secondary battery.

In some embodiments, an angle between the second hole wall 212 and the fourth surface 215 is defined as α, an angle between the third hole wall 213 and the fourth surface 215 is defined as β, and the following relationship is satisfied: 30°<α<β<90°.

Properly setting the angle between the second hole wall 212 and the fourth surface 215 and the angle between the third hole wall 213 and the fourth surface 215 can prevent the welding laser from entering the accommodating cavity 110 as much as possible, and can ensure the welding penetration between the blocking member 220 and the cover plate 210, thereby achieving a reliable connection between the blocking member 220 and the cover plate 210, and improving the reliability of the secondary battery.

Correspondingly, the present disclosure further provides a battery pack including the secondary battery of the above embodiments.

The secondary battery and the battery pack provided in the embodiments of the present disclosure are described above in detail. Although the principles and implementations of the present disclosure are described by using specific examples in this specification, the descriptions of the foregoing embodiments are merely intended to help understand the technical schemes and the core idea of the present disclosure. It should be understood by those having ordinary skills in the art that modifications can be made to the technical schemes described in the foregoing embodiments, or equivalent replacements can be made to some technical features in the technical schemes, as long as such modifications or replacements do not cause the essence of the corresponding technical schemes to depart from the scope of the technical schemes of the embodiments of the present disclosure.

## Claims

1. A secondary battery, having a thickness direction (Z) and a length direction (X) intersecting the thickness direction (Z), the secondary battery comprising:
a housing (100), provided with an accommodating cavity (110);
an electrode assembly (300) arranged in the accommodating cavity (110), wherein the electrode assembly (300) comprises a main body (310) and a tab (320) connected to the main body (310);
a cover plate assembly (200), comprising a cover plate (210), a blocking member (220), a first insulating member (250), a terminal (230), and a connection piece (240), wherein
the cover plate (210) is connected to the housing (100), and the cover plate (210) covers and seals the accommodating cavity (110), the cover plate (210) is provided with an operation opening (211), the operation opening (211) extends through the cover plate (210) in the thickness direction (Z), and the operation opening (211) is in communication with the accommodating cavity (110);
the blocking member (220) is connected to the cover plate (210), and the blocking member (220) covers and seals the operation opening (211);
the first insulating member (250) is arranged in the accommodating cavity (110), and in the thickness direction (Z), the first insulating member (250) is connected to a side of the cover plate (210) facing the electrode assembly (300);
the terminal (230) extends through the cover plate (210) and the first insulating member (250), and the terminal (230) is arranged spaced apart from the blocking member (220) in the length direction (X); and
the connection piece (240) is arranged in the accommodating cavity (110), a side of the connection piece (240) facing away from the electrode assembly (300) is connected to the terminal (230), the tab (320) is electrically connected to the connection piece (240), and in the thickness direction (Z), at least a part of the tab (320) and the connection piece (240) are visible and accessible through the operation opening (211) on the cover plate (210);
and
a second insulating member (400), arranged in the accommodating cavity (110) and connected to the first insulating member (250), wherein in the thickness direction (Z), the second insulating member (400) is connected to a side of the main body (310) facing the cover plate (210), and a side of the connection piece (240) away from the cover plate (210) is connected to the second insulating member (400).

2. The secondary battery of claim 1, wherein:
the second insulating member (400) comprises a base portion (410) and a supporting portion (420);
in the thickness direction (Z), the base portion (410) is connected to a side of the connection piece (240) facing the main body (310);
the supporting portion (420) is connected between the base portion (410) and the main body (310) in the thickness direction (Z), and is connected to the base portion (410) and the main body (310) respectively; and
the tab (320) is arranged spaced apart from the supporting portion (420) in the length direction (X).

3. The secondary battery of claim 2, wherein the terminal (230) extends through the first insulating member (250), the first insulating member (250) is provided with a second mounting hole (251), and the second mounting hole (251) is in communication with the operation opening (211) and the accommodating cavity (110).

4. The secondary battery of claim 2, wherein the second insulating member (400) further comprises a connection portion (430) connected to the first insulating member (250), and a part of the connection portion (430) is connected to the base portion (410) in the thickness direction (Z).

5. The secondary battery of claim 2, wherein the base portion (410) is provided with a first connection hole (411) extending through the base portion (410) in the thickness direction (Z), a part of the tab (320) extends through the first connection hole (411), and the tab (320) is connected to the side of the connection piece (240) facing away from the electrode assembly (300).

6. The secondary battery of claim 5, wherein the connection piece (240) is provided with a second connection hole (241) extending through the connection piece (240) in the thickness direction (Z), the second connection hole (241) is in communication with the first connection hole (411), and the part of the tab (320) extending through the first connection hole (411) extends through the second connection hole (241).

7. The secondary battery of claim 2, wherein the blocking member (220) has a first surface (221) facing the accommodating cavity (110), and an orthographic projection of the connection piece (240) in the thickness direction (Z) onto a plane in which the first surface (221) is located is within an orthographic projection of the base portion (410) in the thickness direction (Z) onto the plane in which the first surface (221) is located.

8. The secondary battery of claim 2, wherein:
the blocking member (220) is further provided with a liquid injection hole (222) extending through the blocking member (220) in the thickness direction (Z);
the base portion (410) comprises a diversion region (440), the diversion region (440) is provided with a diversion cavity (441) having an opening facing the liquid injection hole (222), and the diversion cavity (441) is in communication with the liquid injection hole (222); and
the diversion region (440) is provided with a first diversion hole (442) extending therethrough in the thickness direction (Z), and the first diversion hole (442) is in communication with the diversion cavity (441) and the accommodating cavity (110).

9. The secondary battery of claim 8, wherein the first diversion hole (442) has a first hole wall (443), and an orthographic projection of the first hole wall (443) in the thickness direction (Z) onto the blocking member (220) is located on a peripheral side of the liquid injection hole (222).

10. The secondary battery of claim 8, wherein the diversion region (440) has a second surface (444) facing the blocking member (220), the opening of the diversion cavity (441) is located on the second surface (444), the diversion region (440) is further provided with a through slot (445) extending through the diversion region (440) in the length direction (X), the through slot (445) is in communication with the diversion cavity (441), and the through slot (445) extends through the second surface (444).

11. The secondary battery of claim 2, wherein:
the second insulating member (400) is further provided with a diversion groove (450) extending, in the thickness direction (Z), through the base portion (410) and a surface of the supporting portion (420) facing the base portion (410); and
the supporting portion (420) is provided with a second diversion hole (421) extending through the supporting portion (420) in the thickness direction (Z), and the second diversion hole (421) is in communication with the diversion groove (450).

12. The secondary battery of claim 2, wherein:
the cover plate assembly (200) comprises a plurality of connection pieces (240);
the second insulating member (400) further comprises a protruding portion (460); in the thickness direction (Z), the protruding portion (460) is connected to a side of the base portion (410) close to the connection pieces (240); and
in the thickness direction (Z), at least one of the connection pieces (240) is connected to a side of the protruding portion (460) away from the base portion (410).

13. A battery pack, comprising the secondary battery of any one of claims 1 to 12.
